# FASCICULE DE BREVET EUROPEEN

(11) **EP 2 437 955 B1**
(45) Date de publication et mention de la délivrance du brevet: **05.06.2013**
(21) Numéro de dépôt: 10724015.2
(22) Date de dépôt: 26.05.2010
(51) Int. Cl.: B60H 1/32, B60K 1/00, B60K 11/02, H01M 10/50, B60H 1/00

(54) **DISPOSITIF ET PROCÉDÉ DE GESTION THERMIQUE MULTIFONCTION D'UN VÉHICULE ÉLECTRIQUE**
MULTIFUNKTIONS-THERMOMANAGEMENT-VORRICHTUNG UND -VERFAHREN EINES ELEKTROFAHRZEUGS
MULTIFUNCTION THERMAL MANAGEMENT DEVICE AND METHOD OF AN ELECTRIC VEHICLE

(30) Priorité: 05.06.2009 FR 0902726
(43) Date de publication de la demande: 11.04.2012
(73) Titulaire: Valeo Systèmes Thermiques, 78320 Le Mesnil-Saint-Denis (FR)
(72) Inventeur: AP, Ngy Sru, F-78470 Saint Rémy Lès Chevreuse (FR); JOUANNY, Philippe, F-78280 Guyancourt (FR)
(74) Mandataire: Metz, Gaëlle
(86) Numéro de dépôt international: PCT/EP2010/057240
(87) Numéro de publication internationale: WO 2010/139582

(56) Documents cités:
- FR-A1- 2 792 259
- JP-A- 7 329 544
- US-A1- 2006 169 507

## Description

L'invention concerne un dispositif et procédé de gestion thermique multifonction d'un véhicule automobile, par exemple de type électrique (autrement dit un véhicule entraîné par un moteur électrique participant pour toute ou partie à la propulsion du véhicule).

Il est connu des composants électriques assurant la traction d'un véhicule électrique constitués principalement d'un moteur électrique, d'une batterie délivrant une tension de l'ordre de plusieurs centaines de Volts, et d'un onduleur transformant le courant électrique continu de la batterie en un courant alternatif. Ces composants doivent donc être refroidis, généralement à l'aide d'un radiateur dans lequel s'écoule un liquide de refroidissement.

En outre, les véhicules automobiles électriques comportent de nombreux équipements qui échangent de l'énergie thermique avec leur environnement extérieur. Ces équipements sont, par exemple, le condenseur du circuit de climatisation de l'habitacle du véhicule automobile, le chauffage électrique de l'habitacle, la régulation thermique du bloc batterie. Cependant, un circuit de fluide spécial pour chaque équipement à refroidir ou à réchauffer est prévu. Par exemple, le circuit de climatisation de l'habitacle du véhicule automobile comporte un échangeur de chaleur, constituant un condenseur, disposé à l'avant du véhicule, devant le radiateur de refroidissement du moteur électrique. Un fluide frigorigène particulier, distinct du fluide caloporteur du moteur, parcourt le circuit de climatisation. Des conduites spéciales sont nécessaires pour relier le condenseur à l'évaporateur qui est situé dans le boîtier de l'appareil de climatisation et de chauffage de l'habitacle du véhicule. Il en résulte que les batteries fournissent beaucoup d'énergie électrique afin d'assurer toutes les fonctions thermiques nécessaires au bon fonctionnement dudit véhicule.

A ce titre, le document JP7329544, qui sert de base pour la présentation en deux parties de la revendication 1 et de la revendication 9, propose une solution permettant d'assurer, au sein d'un même dispositif, les différentes fonctions thermiques nécessaire au bon fonctionnement d'un véhicule électrique tel que le chauffage de l'habitacle, la climatisation de l'habitacle et le refroidissement d'un moteur électrique (aussi appelé groupe moto-propulseur ou GMP). Pour cela, ledit dispositif comporte une boucle de climatisation, et, une boucle de refroidissement moteur, ladite boucle de refroidissement moteur comportant une unité électrique (dans ce document un moteur électrique) apte à être refroidi par un liquide de refroidissement et ladite boucle de climatisation comportant un condenseur apte à permettre un échange thermique entre le liquide de refroidissement et un premier fluide caloporteur. Pour chauffer, climatiser ou ventiler l'habitacle selon le dispositif de l'art antérieur, ledit condenseur est implanté directement dans le boîtier de l'appareil de climatisation, de chauffage et de ventilation de l'habitacle. Autrement dit, ce document propose donc une nouvelle conception de boîtier de climatisation, de chauffage et de ventilation de l'habitacle.

Ce système implique donc une modification du boîtier standard, ce qui est particulièrement contraignant puisqu'entrainant un coût de développement supplémentaire dudit boîtier de climatisation, de chauffage et de ventilation.

A cet effet, l'invention propose un dispositif et procédé de gestion thermique multifonction d'un véhicule électrique tel que décrit ci-dessus utilisant les boîtiers de climatisation, de chauffage et de ventilation classiques.

Dans ce but, le dispositif de gestion thermique d'un véhicule selon l'invention comporte une boucle de climatisation et une boucle de refroidissement moteur, ladite boucle de refroidissement moteur comportant une unité électrique participant pour toute ou partie à la propulsion du véhicule et apte à être refroidi par un liquide de refroidissement et ladite boucle de climatisation, dans laquelle circule un fluide caloporteur, comportant au moins un condenseur apte à permettre un échange thermique entre le liquide de refroidissement et ledit fluide caloporteur. Selon l'invention, ladite boucle de refroidissement moteur comporte, en outre, un échangeur de chaleur, dit radiateur de chauffage, apte à permettre un échange thermique entre le liquide de refroidissement et un flux d'air, ledit flux d'air étant destiné à chauffer, climatiser et/ou ventiler l'habitacle du véhicule automobile, ledit condenseur et ledit radiateur de chauffage étant disposé l'un par rapport à l'autre de manière à ce que le liquide de refroidissement traversant ledit radiateur de chauffage puisse être au moins réchauffé en traversant ledit condenseur.

Ainsi, le dispositif peut fonctionner selon plusieurs modes différents de manière à satisfaire tous les besoins thermiques d'un utilisateur et de façon optimisée.

Des modes de réalisations particuliers de l'invention proposent que :
- ladite unité électrique est un groupe moto-propulseur comportant un moteur électrique,
- ladite boucle de climatisation comporte en outre un premier évaporateur apte à permettre un échange thermique entre ledit liquide de refroidissement et ledit fluide caloporteur, et, un second évaporateur apte à permettre un échange thermique entre ledit fluide caloporteur et un flux air,
- ledit premier évaporateur est disposé par rapport audit moteur de manière à ce que les calories/frigories emmagasinées par le liquide de refroidissement après son passage à travers ledit moteur puissent être utilisées lors l'échange qui s'effectuera par la suite dans le premier évaporateur entre liquide de refroidissement et le fluide caloporteur de la boucle de climatisation,
- le radiateur de chauffage est intégré dans un boîtier de chauffage, climatisation et/ou de ventilation de l'habitacle,
- la boucle de refroidissement moteur comporte, en outre, un vase de stockage apte à stocker l'énergie sous forme de calories ou de frigories par l'intermédiaire du liquide de refroidissement, ledit vase étant monté en série d'une part avec le groupe moto-propulseur et d'autre part avec le radiateur de chauffage,
- le stockage de l'énergie dans le vase de stockage s'opère lors de la recharge de la batterie du véhicule électrique,
- le radiateur de refroidissement, le groupe moto-propulseur et le premier évaporateur, apte à permettre un échange thermique entre ledit liquide de refroidissement et ledit fluide caloporteur, sont en série, et
- la voie de contournement du radiateur de refroidissement (16), le groupe moto-propulseur (10, 12) et le premier évaporateur (22), apte à permettre un échange thermique entre ledit liquide de refroidissement et ledit fluide caloporteur, sont en série.

L'invention concerne également un procédé de gestion thermique, notamment pour le refroidissement moteur et/ou le chauffage, la climatisation et/ou la ventilation d'un véhicule automobile, ledit procédé utilisant un dispositif de gestion thermique tel que décrit précédemment et dans lequel ladite boucle de refroidissement moteur comporte deux sous-boucles comportant respectivement ledit radiateur de chauffage et ledit radiateur de refroidissement, et, lors d'un besoin de chauffage de l'habitacle, on transfère les calories d'une desdites sous-boucles à l'autre par l'intermédiaire de la boucle de climatisation et au besoin, on utilise ledit vase de stockage comprenant de l'énergie stockée sous forme de calories, et, si encore besoin, dans cet ordre, des résistances de chauffage sur l'air montées dans un boitier de chauffage, climatisation et/ou de ventilation de l'habitacle puis des résistances de chauffage sur l'eau montées dans ledit vase de stockage.

Des variantes de réalisation du procédé proposent que :
- lors d'un besoin de chauffage et de déshumidification de l'habitacle, on dirige au moins un partie du fluide caloporteur de la boucle de climatisation vers le détendeur et le second évaporateur,
- lors d'un besoin de chauffage et de déshumidification de l'habitacle, on utilise en outre un vase de stockage comprenant de l'énergie stockée sous forme de calories pour chauffer directement l'habitacle,
- lors d'un besoin de climatisation de l'habitacle, on utilise un vase de stockage comprenant de l'énergie stockée sous forme de frigories pour refroidir directement l'habitacle,
- lors de la recharge du vase de stockage en chaleur, le procédé comporte les étapes suivantes :
   - échange de calories entre le fluide caloporteur de la boucle de climatisation et le liquide de refroidissement de la boucle de refroidissement moteur au sein du condenseur, le liquide de refroidissement récupérant ainsi une partie de l'énergie sous forme de calories du fluide caloporteur, et
   - stockage de ladite énergie récupérée par le liquide de refroidissement à son arrivée dans le vase de stockage, et,
- lors de la recharge du vase de stockage en froid, la boucle de refroidissement moteur comporte deux sous-circuits, le premier sous-circuit assurant la partie froide de la boucle de refroidissement moteur et comportant le premier évaporateur et le second sous-circuit comportant le radiateur de refroidissement, ledit procédé comportant les étapes suivantes :
   - échange de frigories entre le fluide caloporteur de la boucle de climatisation et le liquide de refroidissement circulant dans le premier circuit assurant la partie froide de la boucle de refroidissement moteur au sein du premier évaporateur, le liquide de refroidissement récupérant ainsi une partie de l'énergie sous forme de frigories du fluide caloporteur, et
   - stockage de ladite énergie récupérée par le liquide de refroidissement à son arrivée dans le vase de stockage.

D'autres caractéristiques et avantages de la présente invention apparaîtront encore à la lecture de la description qui suit comprenant des exemples de réalisation donnés à titre illustratif en référence aux figures annexées dans lesquelles :
- la figure 1 représente un schéma du dispositif selon l'invention lors d'un premier mode de fonctionnement,
- la figure 2 représente un schéma du dispositif selon l'invention lors d'un second mode de fonctionnement,
- la figure 3 représente un schéma du dispositif selon l'invention lors d'un troisième mode de fonctionnement,
- la figure 4 représente un schéma du dispositif selon l'invention lors d'un quatrième mode de fonctionnement,
- la figure 5 représente un schéma du dispositif selon l'invention lors d'un cinquième mode de fonctionnement,
- la figure 6 représente un schéma du dispositif selon l'invention lors d'un sixième mode de fonctionnement,
- la figure 7 représente un schéma du dispositif selon l'invention lors d'un septième mode de fonctionnement, et
- la figure 8 représente un schéma du dispositif selon l'invention lors d'un second mode de réalisation l'invention.

Tel que représenté sur les figures, un véhicule comporte une unité électrique qui est dans l'exemple illustré ici est un groupe moto-propulseur comportant un moteur 10. Dans cet exemple, le moteur 10 est un moteur électrique,. On entend par moteur électrique, un moteur électrique participant pour toute ou partie à la propulsion du véhicule.

Dans ce mode de réalisation, le moteur 10 est couplé à un onduleur 12 transformant le courant électrique continu de la batterie (non représentée) du véhicule électrique en un courant alternatif. Cet ensemble moteur 10 et onduleur 12 pourra être désigné par le terme Groupe Moto-Propulseur ou GMP dans la suite de la description.

De manière conventionnelle, le moteur 10 est refroidi par un liquide de refroidissement (dans l'exemple de l'eau glycolée) circulant dans une boucle 14 appelée boucle de refroidissement moteur 14 qui permet, notamment, le chauffage principal de l'habitacle (non représenté).

Ici, la boucle de refroidissement moteur 14 comporte en série et, ici, dans le sens de circulation du liquide de refroidissement, ledit GMP, un premier évaporateur 22 apte à permettre un échange thermique entre ledit liquide de refroidissement et un fluide caloporteur d'une boucle de climatisation 18, un radiateur de refroidissement 16 traversé par un flux d'air, et placé, par exemple, à l'avant d'un compartiment moteur et permettant d'évacuer sur l'extérieur les calories issues, notamment, du GMP et une première pompe électrique 19 apte à assurer la circulation du liquide de refroidissement dans ladite boucle de refroidissement 14.

Un mode de réalisation non représenté propose que le premier évaporateur 22 soit en parallèle du GMP. Cette configuration permet, en cas de besoin et l'aide d'au moins une vanne de court-circuiter le passage du liquide de refroidissement au travers du GMP. En d'autres termes, dans un tel cas, le GMP n'échange pas de calories/frigories avec le liquide de refroidissement.

On pourra remarquer que, dans le dispositif selon l'invention, le GMP ou moteur électrique 10 est disposé de manière contiguë au premier évaporateur 22. Cette disposition a pour but d'utiliser les calories/frigories emmagasinées par le liquide de refroidissement après son passage au moins à travers le moteur 10 lors l'échange qui s'effectuera par la suite dans le premier évaporateur 22 entre liquide de refroidissement et le fluide caloporteur de la boucle de climatisation 18.

Dans le mode de réalisation illustré ici, la boucle de refroidissement moteur 14 comporte en outre une canalisation ou voie disposée en parallèle du radiateur de refroidissement 16. Cette voie, encore appelée voie de dérivation comporte une vanne 26 dite de dérivation, montée en dérivation de la boucle de refroidissement moteur 14 aux bornes du radiateur de refroidissement 16. La voie de dérivation ainsi que la vanne de dérivation 26 permettent, notamment, la régulation du refroidissement dudit GMP par couplage avec une vanne 28 montée en aval du radiateur de refroidissement 16 et apte a contrôler le débit de ladite première pompe électrique 19.

Ces vannes 26 et 28 peuvent être notamment des vannes régulées ou des vannes thermostatiques. Il est aussi possible de regrouper les fonctions des vannes 26 et 28 dans un unique élément tel qu'une vanne 3 voies par exemple.

La voie de dérivation, est donc, dans ce mode de réalisation, disposée en série avec, au moins, le GMP et le premier évaporateur 22.

La boucle de refroidissement moteur 14 comprend, en outre, un échangeur de chaleur 25, autrement appelé radiateur de chauffage 25 apte à permettre un échange de chaleur entre le liquide de refroidissement et un flux d'air, ledit flux d'air étant destiné à chauffer l'habitacle du véhicule automobile.

Ici, le radiateur de chauffage 25 est disposé dans un boîtier de chauffage, climatisation et/ou de ventilation 38 (encore connu sous sa dénomination anglaise HVAC) et diffuse de l'air chaud de manière à chauffer l'habitable du véhicule.

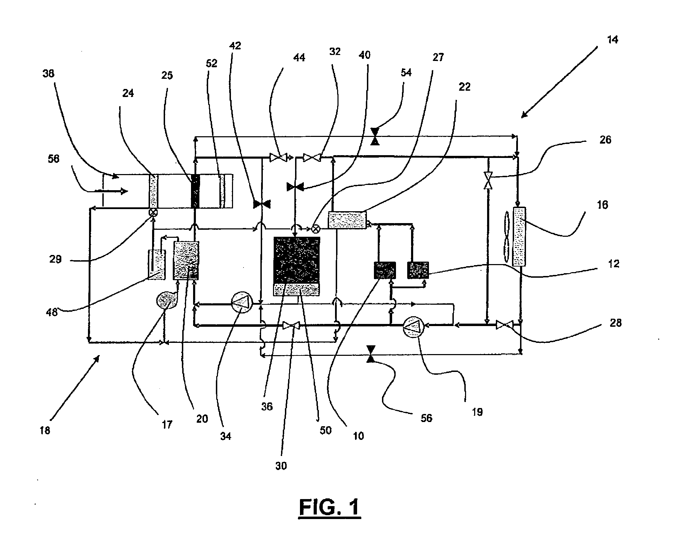

Dans le dispositif illustré à la figure 1, le radiateur de chauffage 25 est placé sur une voie comportant en amont de ce dernier, une vanne 30 et un condenseur 20.

La vanne 30 est apte à autoriser ou non la circulation du liquide de refroidissement provenant du radiateur de refroidissement 16 et/ou de la voie de dérivation au travers du condenseur 20 et du radiateur de chauffage 25.

Suite à son passage dans le radiateur de chauffage 25, le liquide de refroidissement pourra notamment emprunter au moins deux voies de circulation différentes.

Une première voie dite de retour direct au radiateur de refroidissement 16 permet la circulation directe du liquide de refroidissement vers le radiateur de refroidissement 16. Dans le mode de réalisation illustré ici, la voie de retour direct au radiateur de refroidissement comporte une vanne 54 apte à autoriser ou non la circulation du liquide de refroidissement à travers cette dernière.

En sortant du radiateur de chauffage 25, le liquide de refroidissement pourra aussi emprunter une voie dite de contournement d'un vase de stockage 36. Dans ce mode de réalisation, la voie de contournement du vase de stockage 36 est munie d'une vanne 42 apte à autoriser ou non la circulation du liquide de refroidissement à travers cette dernière.

Autrement dit, une voie de contournement est prévue aux bornes du vase de stockage 36 de manière à réguler, si besoin, le débit de la pompe 34, ladite voie étant munie d'une vanne 42 pour commander ou non son utilisation.

Ici, la voie de contournement du vase de stockage 36 communique avec une seconde pompe électrique 34, elle-même reliée au condenseur 20.

Suite à son passage à travers le radiateur de chauffage 25, il est aussi possible de diriger le liquide de refroidissement vers une voie comportant le vase de stockage 36. Autrement dit, un vase de stockage thermique 36 (autrement dit TST, Thermal Storage Tank) pourra être intégré dans le dispositif selon l'invention de manière à stocker le liquide de refroidissement et plus particulièrement les calories ou les frigories stockées par le liquide de refroidissement pendant la phase de recharge de la batterie pour ensuite les utiliser selon les modes de fonctionnement du dispositif.

Dans ce mode de réalisation, il est prévu une vanne supplémentaire 44 entre la voie de contournement du vase de stockage 36 et la voie intégrant le vase de stockage 36. Cette vanne supplémentaire 44 est prévue de manière à commander l'utilisation ou non de ladite voie de contournement du vase de stockage 36 pour réguler si besoin le débit sur la seconde pompe électrique 34 en fonction du mode de fonctionnement du dispositif.

Selon un mode particulier de réalisation de l'invention, il n'y a que du liquide de refroidissement qui circule dans le vase de stockage ou qui y est stocké. Pour cela, on peut prévoir que le vase de stockage 36 soit monté en série à la fois avec une seconde pompe électrique 34, le condenseur 20, et le radiateur de chauffage 25 de manière à recharger le vase en calories ou frigories issues, par exemple, de l'échange entre le liquide de refroidissement et le fluide caloporteur dans le condenseur 20.

Pour contrôler l'utilisation ou non du vase de stockage 36, on a, ici, prévu une vanne 40 en amont dudit vase.

Dans ce mode de réalisation, la voie comportant le vase de stockage 36 communique soit avec la voie comportant la première pompe électrique 19 soit avec la voie comportant la deuxième pompe électrique 34.

Le mode de réalisation particulier illustré à la figure 1 propose en outre une voie permettant une communication entre la voie comportant le radiateur de refroidissement 16 et la seconde pompe électrique 34. Cette voie comporte une vanne 56 pour commander ou non son emprunt par le liquide de refroidissement.

Il est à noter que la boucle de refroidissement moteur est, dans ce mode de réalisation, prévue pour pouvoir être scindée en au moins deux sous-boucles indépendantes. On entend par indépendante le fait que le liquide de refroidissement circulant dans une des deux sous-boucles ne communique pas avec ou ne circule pas dans l'autre sous-boucle.

Afin de connecter ou de séparer, selon le mode de fonctionnement, les deux sous-boucles, on utilise la première vanne 30 couplée à une seconde vanne 32.

Pour rappel, la vanne 30 est montée en série entre le GMP et le condenseur 20 apte à permettre un échange thermique entre le liquide de refroidissement et le fluide caloporteur de la boucle de climatisation 18. Elle permet de couper, si besoin, la circulation du fluide de refroidissement vers le condenseur 20.

La seconde vanne 32 est présente en aval du premier évaporateur 22 et permet de couper, si besoin, la circulation du même fluide vers le vase de stockage 36.

La vanne supplémentaire 44 est prévue entre la voie contournement du vase de stockage 36 et la voie intégrant le vase de stockage de manière à commander l'utilisation ou non de ladite voie de contournement du vase de stockage 36 pour réguler si besoin le débit sur la seconde pompe électrique 34 en fonction du mode de fonctionnement du dispositif.

Ce dispositif optimisé permet ainsi de proposer différents modes de fonctionnement selon les besoins de l'utilisateur en fraîcheur ou en chaleur.

Le dispositif selon l'invention prévoit une seconde boucle, à savoir une boucle de climatisation 18 dans lequel circule un fluide caloporteur tel que du R 134A.

La boucle de climatisation 18 comporte au moins, et dans cet exemple en série et dans le sens de circulation du fluide caloporteur, un compresseur 17, un condenseur 20 apte à permettre un échange thermique entre ledit liquide de refroidissement et ledit fluide caloporteur.

Dans cet exemple de réalisation, un filtre déshydrateur 48 est placé en sortie du condenseur 20. Le filtre déshydrateur 48 filtre le fluide caloporteur et retient les impuretés, l'humidité, tout en constituant une réserve tampon.

Après le passage dans le condenseur 20, le liquide réfrigérant pourra être dirigé vers un premier évaporateur 22 apte à permettre un échange thermique entre ledit liquide de refroidissement et ledit premier fluide caloporteur, et/ou, un second évaporateur 24 apte à permettre un échange thermique entre le fluide caloporteur et un flux d'air. Le premier 22 et le second 24 évaporateur étant monté en parallèle l'un de l'autre.

Ici, le second évaporateur 24 est intégré dans le boîtier de chauffage, climatisation et/ou de ventilation 38 en communication avec l'habitacle du véhicule.

La configuration de la boucle de climatisation 18 d'un dispositif selon l'invention permet d'effectuer au besoin un chauffage complémentaire de l'eau glycolée de la boucle de refroidissement moteur 14.

Des moyens de détente 27 et 29 sont intercalés en amont respectivement du premier évaporateur 22 et du second évaporateur 24, les moyens de détente 27, 29 étant aptes à être sollicités ou non pour commander ou non l'utilisation du premier et du second évaporateur en fonction du mode de fonctionnement choisi du dispositif.

### Mode 1 : climatisation de l'habitacle en marche et refroidissement du GMP, par exemple pour des températures supérieures à 30°C

En référence au schéma de la figure 1 illustrant ce mode de fonctionnement, les vannes 30, 32, 44 sont ouvertes ce qui permet au liquide de refroidissement de circuler dans la boucle de refroidissement moteur 14 afin de refroidir le GMP. En d'autres termes, ici, on utilise une seule boucle de refroidissement moteur pour dissiper l'énergie emmagasiner dans le liquide de refroidissement.

Plus concrètement, la pompe électrique 19 est activée permettant la circulation du liquide de refroidissement au travers du moteur 10 couplé à l'onduleur 12, ces deux éléments constituant dans cet exemple le GMP du véhicule électrique. Le liquide de refroidissement se dirige ensuite vers le premier évaporateur 22, puis vers le radiateur de refroidissement 16 avant de terminer son cycle dans la pompe électrique 19. Les calories dégagées par le GMP sont ainsi évacuées majoritairement par le radiateur de refroidissement 16. Suite à son passage dans la première pompe 19, le liquide de refroidissement pourra aussi être dirigé vers le condenseur 20, la vanne 30 étant ici ouverte. Après le condenseur, le liquide de refroidissement sera dirigé vers le radiateur de chauffage 25 puis ré-injecter vers le radiateur de refroidissement 16.

En parallèle au fonctionnement de la boucle de refroidissement moteur 14, la boucle de climatisation 18 est en état de fonctionnement.

Ainsi, le compresseur 17 comprime le fluide caloporteur. Le fluide passe après compression dans le condenseur 20 situé, par exemple, dans le compartiment moteur afin d'en évacuer le maximum de calories. En d'autres termes, ici, le liquide caloporteur de la boucle de climatisation 18 va échanger des calories avec le liquide de refroidissement de la boucle de refroidissement moteur 14, ce qui va entraîner, dans ce mode de réalisation un réchauffement du liquide de refroidissement à sa sortie du condenseur 20.

Ici, un filtre déshydrateur 48 est placé en sortie du condenseur 20. Le fluide caloporteur comprimé et refroidit est ensuite dirigé vers le détendeur 29 et le second évaporateur 24 dans lequel le fluide se vaporise alors en absorbant des calories.

L'air, propulsé par un ventilateur en passant au travers dudit second évaporateur 24 sera de l'air frais. Le fluide caloporteur après avoir traversé cet évaporateur retourne enfin au compresseur 17 pour terminer son cycle.

Autrement dit, dans ce mode de fonctionnement, on n'utilise pas le premier évaporateur 22 ni le détendeur 27. En d'autres termes, le fluide caloporteur circule dans le second évaporateur 24 et échange avec les calories de l'air circulant dans le boîtier 38.

Grâce à la connexion des deux boucles de refroidissement moteur 14 et climatisation 18 décrites ci-dessus, le liquide de refroidissement circule vers le condenseur 20 où un échange thermique entre le liquide de refroidissement et le fluide caloporteur se produit. Avantageusement, avec le pilotage de la vanne 30, il est possible moduler le refroidissement entre les boucles de refroidissement moteur 14 et de climatisation 18.

Par ailleurs, il est possible d'ouvrir la vanne 40 pour permettre de stocker, les calories par le dispositif, dans le vase stockage 36 afin de les conserver en vue d'une utilisation ultérieure, par exemple, pour améliorer temporairement le refroidissement du condenseur 20 et/ou du GMP.

Bien sûr, suivant les conditions, on peut, en utilisant les différentes vannes du circuit, modifier le fonctionnement du système, pour satisfaire au mieux ses besoins.

### Mode 2 : climatisation de l'habitacle en marche et refroidissement du GMP, par exemple pour des températures supérieures à 30°C, en démarrage en été avec vase de stockage chargé en frigories

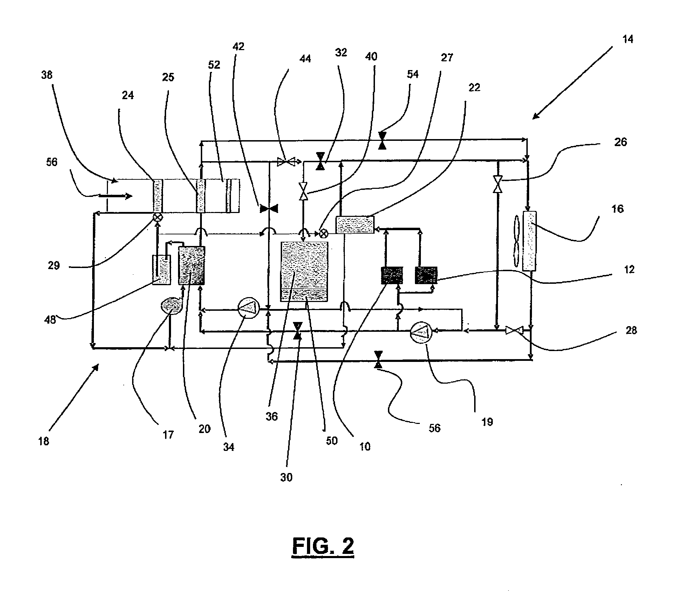

Selon ce mode de fonctionnement et en référence à la figure 2, le vase de stockage 36 a été chargé en frigories lors de la recharge de la batterie.

Afin d'avoir accès à cette réserve d'énergie, les vannes 40, 44 sont ouvertes, et les vannes 30 et 32 sont en position fermée. Cette position particulière des vannes permet de créer deux sous-boucles dans la boucle de refroidissement moteur 14.

Ici, une première sous-boucle comporte au moins le vase de stockage 36, la seconde pompe électrique 34, le condenseur 20 et le radiateur de chauffage 25.

Ici, la seconde sous-boucle comporte au moins, le radiateur de refroidissement 16 (et/ou sa voie de dérivation), la première pompe électrique 19, le GMP et le premier évaporateur 22.

Le liquide de refroidissement circulant dans la première sous-boucle ne circule pas dans la seconde. Entre d'autres termes, ici la boucle de refroidissement moteur est scindée en deux sous-unités indépendantes.

Dans ce mode de fonctionnement, la pompe électrique 34 est mise en marche pour activer la circulation du liquide de refroidissement contenant les frigories du vase de stockage 36 vers le condenseur 20. Le flux d'air expulsé dans l'habitacle à travers le radiateur de chauffage 25 sera donc de l'air frais. On peut donc, dans un premier temps, refroidir l'habitacle sans utiliser le compresseur.

Dans ce mode de fonctionnement, la boucle de climatisation 18 est inactive. En d'autres termes, le fluide caloporteur ne circule pas dans la boucle de climatisation 18.

Dans un second temps, il sera possible de mettre en marche le compresseur 17 selon un mode de climatisation classique. Dans ce cas, le fluide caloporteur traversant le condenseur 20 est refroidi avec le liquide de refroidissement provenant du vase de stockage 36 contenant les frigories et ceci avec un très bon rendement.

Après un certain temps, le fonctionnement normal de climatisation et de refroidissement du GMP pour des températures supérieures à 30°C tel que décrit précédemment est utilisé.

### Mode 3 : « chauffage normal » et refroidissement du GMP, par exemple pour des températures comprises entre -5°C et 10°C directement avec le vase de stockage chargé en calories

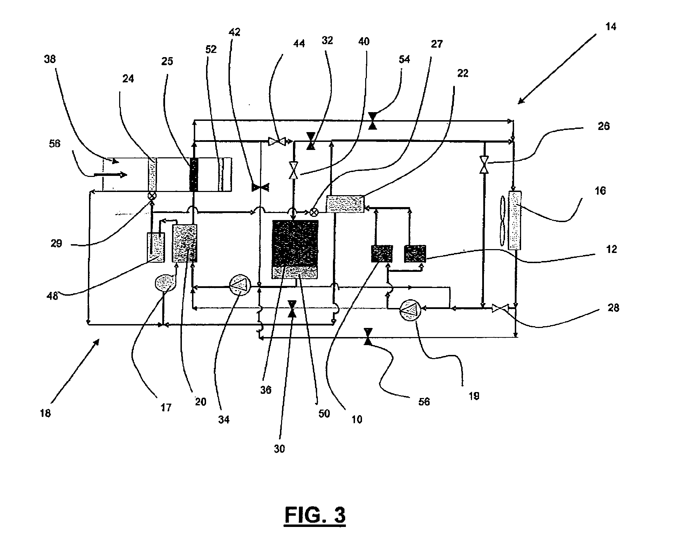

Selon ce mode de fonctionnement et en référence à la figure 3, le vase de stockage 36 a été chargé en calories lors de la recharge de la batterie.

Afin d'avoir accès à cette réserve d'énergie, les vannes 40, 44 sont ouvertes, et les vannes 30 et 32 sont en position fermée. Cette position particulière des vannes est la même que celle décrite en relation avec le mode 2 et permet de créer deux sous-boucles (ici, identiques à celle du mode 2) dans la boucle de refroidissement moteur 14.

Dans ce mode de fonctionnement, la pompe électrique 34 est mise en marche pour activer la circulation du liquide de refroidissement contenant les calories du vase de stockage 36 vers le condenseur 20. Ainsi, le flux d'air expulsé dans l'habitacle à travers le radiateur de chauffage 25 sera donc de l'air chaud. On peut donc, dans un premier temps, réchauffer l'habitacle sans utiliser le compresseur.

Un mode de réalisation particulier propose que le vase de stockage 36 soit muni d'au moins une résistance de chauffage 50, dite résistance CTP sur l'eau 50, pour chauffer le liquide de refroidissement contenu dans le vase de stockage.

Un autre mode de réalisation propose que le boîtier de chauffage, climatisation et/ou de ventilation 38 soit lui-aussi muni de résistance de chauffage 52 sur l'air, dite résistance CTP sur l'air 52. Avantageusement, la résistance CTP sur l'air 52 est disposée en sortie du boîtier de chauffage, climatisation et/ou de ventilation 38, proche de l'habitacle.

Ces résistances peuvent être utilisées, en appoint, séparément ou conjointement selon les besoins de l'utilisateur.

Dans l'éventualité où le besoin de chauffage est plus faible, la vanne 42, de la voie de contournement du vase de stockage 36, est ouverte pour dévier la circulation du liquide de refroidissement dans cette voie et ainsi limiter le volume de liquide de refroidissement provenant du vase de stockage. Une autre possibilité est aussi de réguler le débit de la pompe électrique 34. Ainsi, le volume de liquide de refroidissement provenant du vase de stockage peut être réduit selon les besoins.

En parallèle au fonctionnement de la boucle de refroidissement moteur 14, la boucle de climatisation 18 est en état de fonctionnement.

Comme précédemment, le compresseur 17 comprime le fluide caloporteur qui se dirige ensuite dans le condenseur 20.

A l'inverse des deux modes précédents, le fluide caloporteur comprimé et refroidi est ensuite dirigé vers le détendeur 27 et le premier évaporateur 22 dans lequel le fluide se vaporise alors en absorbant des calories provenant du liquide de refroidissement circulant dans le sous-boucle comportant le GMP..

Autrement dit, dans ce mode de fonctionnement, on n'utilise pas le second évaporateur 24 ni le détendeur 29. En d'autres termes, ici, le fluide caloporteur circule uniquement dans le premier évaporateur 22.

Dans ce mode de réalisation, on utilise de manière avantageuse les calories libérées dans le liquide de refroidissement par son passage dans le GMP pour vaporiser le fluide caloporteur circulant dans le premier évaporateur 22. En d'autres termes, le liquide de refroidissement, après s'être échauffé lors de son passage à travers le GMP, échange avec le fluide caloporteur circulant dans le premier évaporateur 22.

### Mode 4 : « chauffage intense » et refroidissement du GMP, par exemple pour des températures comprises entre -18°C et -5°C, en démarrage avec l'énergie du vase de stockage chargé en calories et utilisation du premier évaporateur apte à permettre un échange entre le liquide de refroidissement et le fluide caloporteur.

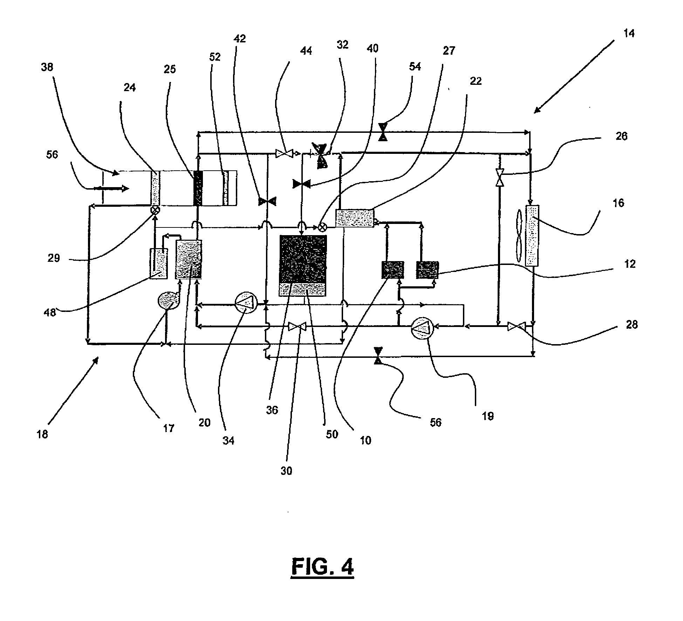

Selon ce mode de fonctionnement et en référence à la figure 4, le vase de stockage 36 a été chargé en calories lors de la recharge de la batterie.

Afin d'avoir accès à cette réserve d'énergie, les vannes 40, 44 sont ouvertes, et les vannes 30 et 32 sont en position fermée. Cette position particulière des vannes est la même que celle décrite en relation avec le mode 2 ou 3 et permet de créer deux sous-boucles (identiques, ici, à celle du mode 2 et/ou 3) dans la boucle de refroidissement moteur 14.

Dans ce mode de fonctionnement, la pompe électrique 34 est mise en marche pour activer la circulation du liquide de refroidissement contenant les calories du vase de stockage 36 vers le condenseur 20.

Le flux d'air expulsé dans l'habitacle à travers le radiateur de chauffage 25 sera donc, ici aussi, de l'air chaud.
D'autre part, pour un chauffage encore plus intense, on couple ce chauffage à l'aide du vase de stockage avec la mise en circulation du fluide caloporteur dans la boucle de climatisation 18 et ceci dans un mode dans lequel on va utiliser le premier évaporateur 22 apte à permettre un échange entre le liquide de refroidissement et le fluide caloporteur.

L'utilisation de cet évaporateur permet de faire fonctionner la seconde sous boucle du circuit de refroidissement moteur 14 (autrement dit celle comportant le radiateur de refroidissement 16) dans un mode dit pompe à chaleur. Autrement dit, et comme expliqué plus bas, dans un tel mode de fonctionnement et compte tenu de la température de l'air extérieur inférieure à 0°C (ici, par exemple, entre -18°C et -5°C), il est possible de prélever de l'énergie (autrement dit des calories) sur l'air extérieur.

Pour cela, le compresseur 17 est en marche et comprime le fluide caloporteur. Le fluide passe après compression dans le condenseur 20 situé, par exemple, dans le compartiment moteur afin d'en évacuer le maximum de calories.

Le fluide comprimé et refroidi est ensuite dirigé vers le détendeur 27 puis vers le premier évaporateur 22 où un échange de chaleur entre le fluide caloporteur et le liquide de refroidissement va s'opérer, le fluide caloporteur se vaporise alors en absorbant des calories du liquide de refroidissement.

Le fluide retourne ensuite au compresseur 17 puis au condenseur 20 où un échange de chaleur s'opère entre le liquide de refroidissement issu du vase de stockage chargé en calories et le fluide caloporteur lui aussi chargé en calories.

En d'autres termes, ici, la boucle de climatisation fonctionne selon un mode « classique ».

On peut remarquer que, dans ce mode de fonctionnement le fluide caloporteur interagit avec chacune des sous-boucles de la boucle de refroidissement moteur 14, autrement dit à la fois avec la sous-boucle comportant au moins radiateur de chauffage 25 et la sous-boucle comportant au moins le radiateur de refroidissement 16.

La sous-boucle de la boucle de refroidissement moteur 14 comportant le radiateur de refroidissement 16 fonctionne de la manière suivante : un échange s'effectue au niveau du premier évaporateur 22 entre le liquide de refroidissement chaud provenant du GMP et le fluide caloporteur de la boucle de climatisation 18, cet échange refroidi le liquide de refroidissement qui est dirigé à sa sortie du premier évaporateur vers le radiateur de refroidissement 16. Un nouvel échange s'opère, au niveau du radiateur de refroidissement 16, entre le liquide de refroidissement et l'air extérieur, de température inférieure ici à celle du liquide de refroidissement. Ainsi, après avoir traversé le radiateur de refroidissement 16, le liquide de refroidissement emmagasinne des calories prélevées lors de l'échange avec l'air extérieur.

Le fluide de refroidissement est ensuite dirigé vers le GMP où il continue de se charger en calories.

En d'autres termes, le liquide de refroidissement est chargé en calories provenant, ici, à la fois de l'échange se produisant au niveau du radiateur de refroidissement 16 et de l'échange au niveau du GMP.

Ainsi, ici, on utilise de manière avantageuse les calories libérées à la fois dans le liquide de refroidissement par son passage dans le GMP et dans le radiateur de refroidissement 16 pour vaporiser le fluide caloporteur circulant dans le premier évaporateur 22.

En d'autres termes, le liquide de refroidissement, après s'être échauffé (ou chargé en calories) lors de son passage à travers le radiateur de refroidissement 16 et le GMP, échange avec le fluide caloporteur circulant dans le premier évaporateur 22 et sors du premier évaporateur 22 en s'étant refroidi par rapport à sa température d'entrée.

De son coté, le fluide caloporteur, chargé en calories, est dirigé vers le condenseur 20 via le compresseur 17. Comme expliqué plus haut, le fluide caloporteur échange, au niveau du condenseur 20, avec le liquide de refroidissement de l'autre sous-boucle comportant le radiateur de chauffage 25. Autrement dit, suite à son passage dans le condenseur 20 le liquide de refroidissement emmagasine des calories (provenant du fluide caloporteur). Ces calories sont ensuite transmises à l'air traversant le radiateur de chauffage dans le but de chauffer l'habitacle du véhicule automobile.

Ainsi, selon ce mode de fonctionnement, le chauffage est assuré au moins en partie par l'énergie prélevée dans l'air extérieur, au niveau de du radiateur de refroidissement 16, ainsi que sur l'énergie dissipée par le GMP.

En d'autres termes, ici, les calories transitent entre les deux sous-boucles de la boucle de refroidissement moteur 14 par l'intermédiaire de la boucle de climatisation 18. Encore autrement dit, on transfère les calories d'une des deux sous-boucles à l'autre par l'intermédiaire de la boucle de climatisation 18.

Si ceci s'avère insuffisant, des résistances pourront être utilisées.

Il convient de noter que ce type de chauffage est sujet à l'apparition du givre au niveau de l'évaporateur lorsque le système fonctionne à des températures voisines ou inférieures à 0°C. Dans ce cas de figure, la solution consiste à continuer d'utiliser la valorisation de l'énergie perdue au niveau du GMP, c'est-à-dire vanne 26 ouverte et vanne 28 fermée, mais également d'utiliser l'énergie contenue dans le vase de stockage, devenu trop froid pour assurer du chauffage en utilisation directe. En effet, ce dernier constitue une bonne source d'énergie pour le fonctionnement du mode pompe à chaleur, en utilisant les vannes 32 et 40, et en cas de nécessité les résistances électrique CTP.

### Mode 5 : « déshumidification » utilisant la fonction climatisation et refroidissement du GMP, par exemple pour des températures comprises entre 10°C et 20°C, avec l'énergie du vase de stockage chargé en calories et la pompe à chaleur

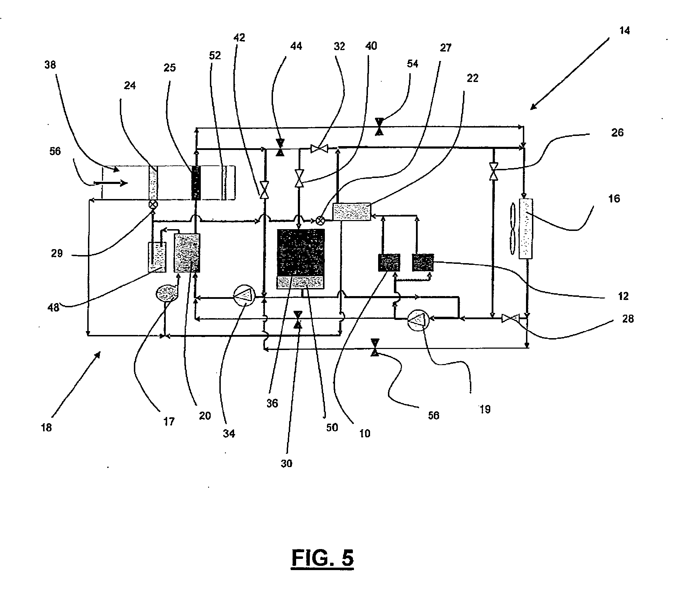

Selon ce mode de fonctionnement et comme illustré à la figure 5, le dispositif selon l'invention comporte une boucle de refroidissement moteur 14, c'est-à-dire avec deux sous-boucles comportant, respectivement, le radiateur de chauffage 25 et le radiateur de refroidissement moteur 16. La sous-boucle comportant le radiateur de refroidissement comporte en outre, ici, le vase de stockage 36, grâce à l'ouverture de la vanne 32.

Dans ce mode de fonctionnement du dispositif selon l'invention, le fluide caloporteur de la boucle de climatisation 18 est, dans un tel cas, dirigé au moins vers le détendeur 29 et le second évaporateur 24. Le second évaporateur 24 assure, ici, la fonction « déshumidification » de l'air le traversant.

Selon une variante de ce mode de fonctionnement, le fluide caloporteur est dirigé à la fois vers le détendeur 29 et le second évaporateur 24 ainsi que vers le détendeur 27 et le premier évaporateur 22. En d'autres termes, ici, les deux évaporateurs 22 et 24 sont utilisés de manière simultanée.

Dans ce mode de fonctionnement, il est possible de moduler la quantité de chaleur cédée par le liquide de refroidissement à l'air traversant le radiateur de chauffage 25 et ceci en utilisant notamment les vannes 40, 42 et 44.

En effet, dans ce mode de fonctionnement, la pompe électrique 34 est mise en marche et la vanne 44 est fermée pour activer la circulation du liquide de refroidissement par la voie de contournement du vase de stockage 36 vers le condenseur 20.

Le flux d'air expulsé dans l'habitacle à travers le radiateur de chauffage 25 sera donc de l'air moins chaud que lorsque le liquide de refroidissement emprunte la voie comprenant le vase de stockage 36.

Bien sûr, les résistances CTP sur l'air peuvent aider à un appoint de chauffage si nécessaire.

### Mode 6 : « Recharge en chaleur » du vase de stockage, par exemple pour des températures extérieures inférieures à -5°C et utilisation du premier évaporateur apte à permettre un échange entre le liquide de refroidissement et le fluide caloporteur.

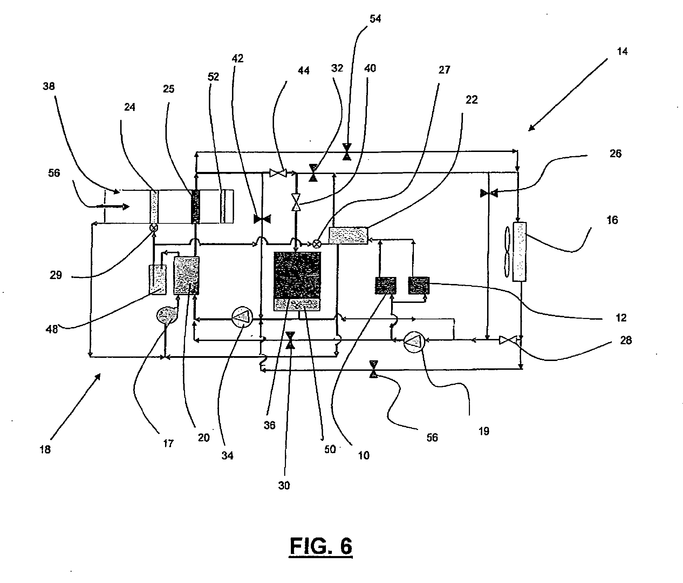

Dans ce mode de fonctionnement et comme illustré à la figure 6, le fluide caloporteur interagit avec chacune des sous-boucles de la boucle de refroidissement moteur 14, comme décrit en relation avec le mode 4.

Afin de recharger le vase de stockage 36 lors de la recharge de la batterie, les vannes 40, 44 sont ouvertes, et la pompe électrique 34 est mise en marche pour activer la circulation du liquide de refroidissement à travers le vase de stockage 36 et vers le condenseur 20.

Le fluide caloporteur circulant dans le condenseur 20 est chargé en calories suite à son échange avec le liquide de refroidissement (provenant de la sous-boucle comportant le radiateur de refroidissement 16) dans le premier évaporateur 22, calories qu'il va échanger avec le liquide de refroidissement de l'autre sous-boucle (comportant le radiateur de chauffage 24). En d'autres termes, ici, le liquide de refroidissement se réchauffe au contact du fluide caloporteur. Encore autrement dit, le liquide de refroidissement récupère ainsi une partie de l'énergie sous forme de calories du fluide caloporteur et le stocke à son arrivée dans le vase de stockage 36.

Un chauffage ou pré-conditionnement de la chaleur est, en outre, possible en activant le débit du flux d'air traversant radiateur de chauffage 25. Avantageusement, on peut utiliser les vannes 42 et 44 pour optimiser le couple stockage / pré-conditionnement de la chaleur en vue d'une utilisation ultérieure.

En d'autres termes, ici aussi, les calories transitent entre les deux sous-boucles de la boucle de refroidissement moteur 14 par l'intermédiaire de la boucle de climatisation 18.

### Mode 7 : « Recharge en froid » dans le vase de stockage, par exemple pour des températures extérieures supérieures à 30°C et utilisation du premier évaporateur apte à permettre un échange entre le liquide de refroidissement et le fluide caloporteur.

Pour pouvoir stocker de l'énergie dissipée sous forme de frigories dans le vase de stockage 36, le liquide de refroidissement doit se charger desdits frigories.

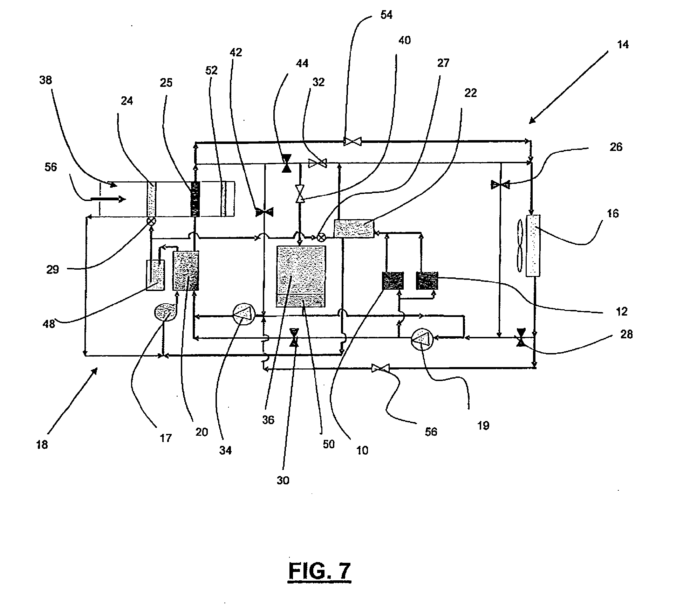

Pour cela et comme illustré à la figure 7, dans un premier sous-circuit de la boucle de refroidissement 14 du GMP, assurant la partie froide de ladite boucle de refroidissement moteur 14, la pompe électrique 19 met en circulation le liquide de refroidissement à travers le GMP vers le premier évaporateur 22. A la sortie du premier évaporateur 22, le liquide de refroidissement est ensuite dirigé vers le vase de stockage 36. Après la traversée du vase de stockage 36, le liquide de refroidissement est redirigé vers la pompe électrique 19. La vanne 30 est, ici, fermée.

Une partie du liquide de refroidissement circule simultanément selon un second sous-circuit allant du condenseur 20 au radiateur de chauffage 25 puis vers le radiateur de refroidissement 16 par la voie de retour direct au radiateur de refroidissement 16 créée entre ledit radiateur de chauffage 25 et le radiateur de refroidissement 16. Ici, cette voie est contrôlée par la vanne 54 en position ouverte.

Ensuite, le liquide de refroidissement est orienté vers la pompe 34 par la voie permettant une communication entre la voie comportant le radiateur de refroidissement 16 et la seconde pompe électrique 34 et créée entre ledit radiateur de refroidissement 16 et ladite pompe. Ici, cette voie est contrôlée par la vanne 56 en position ouverte, avant de refouler ledit liquide une nouvelle fois dans le condenseur 20 pour terminer son cycle.

A la sortie du radiateur de refroidissement 16 du premier sous circuit, le liquide de refroidissement s'est refroidi, en d'autres termes, il s'est chargé frigories. Ces frigories vont être échangés au niveau du condenseur 20 avec le fluide caloporteur de la boucle de climatisation 18.

Le fluide caloporteur est ensuite conduit vers le premier évaporateur 22 où les frigories emmagasinées vont être transférées au liquide de refroidissement du premier sous-circuit en vue du stockage de ces dernières dans le vase de stockage 36.

En d'autres termes, au sein du premier évaporateur 22, un échange se produit entre le fluide caloporteur chargé en frigories issus de la boucle de climatisation 18 entre le fluide caloporteur et le liquide de refroidissement. Plus concrètement, le fluide caloporteur cède une partie de ses frigories au liquide de refroidissement. Ledit liquide de refroidissent ainsi chargé sera orienté vers le vase de stockage 36 grâce aux vannes 32 et 40 en position ouverte, et à la vanne 44 fermée avant de rejoindre la pompe 19 pour terminer son cycle.

Ainsi, le vase de stockage 36 se charge, par l'intermédiaire du liquide de refroidissement, en énergie dissipée sous forme de frigories par échange thermique dans le premier évaporateur 22.

Un mode de réalisation non représenté propose que une communication directe (c'est-à-dire sans passer par le GMP) entre la pompe 19 et le premier évaporateur 22.

Selon ce mode de fonctionnement, il est possible d'assurer un pré-conditionnement en ouvrant la vanne de détente 29 et un ventilateur (non représenté) pour souffler un flux d'air frais dans l'habitacle. Ceci permettra, lors du roulage suivant, de limiter la consommation d'énergie pour assurer le confort thermique de l'habitacle en mode climatisation. Cette possibilité est réservée pour les cas de climat très chaud.

Ainsi, selon le dispositif de l'invention, le vase de stockage peut stocker des calories ou des frigories suivant le besoin de l'utilisateur en hiver ou en été. Ceci est possible grâce à la gestion thermique du dispositif et plus particulièrement grâce à la gestion de la boucle de refroidissement moteur 14 et de la boucle de climatisation 18.

Ainsi, l'invention décrite procure de nombreux avantages, elle permet notamment d'utiliser les systèmes de chauffage, climatisation et /ou de ventilation classique sans apporter de modification. Par ailleurs, l'encombrement du dispositif en face avant est particulièrement réduit puisqu'elle ne dispose que d'un échangeur dans cette zone, ledit échangeur étant le radiateur de refroidissement 16.

Par ailleurs, le dispositif selon l'invention fonctionne en mode pompe à chaleur ou en mode climatisation sans aucune inversion de cycle. Un autre avantage particulièrement important de l'invention est la possibilité de stocker l'énergie dissipée en calories ou en frigories par l'intermédiaire du liquide de refroidissement dans le vase de stockage 36. Cette réserve d'énergie chaude ou froide pouvant ensuite en utilisation directe ou indirecte pour chauffer ou refroidir l'habitacle. Enfin, une valorisation de l'Energie thermique du GMP en chauffage directe ou indirect est prévue via la pompe à chaleur suivant les conditions d'utilisation.

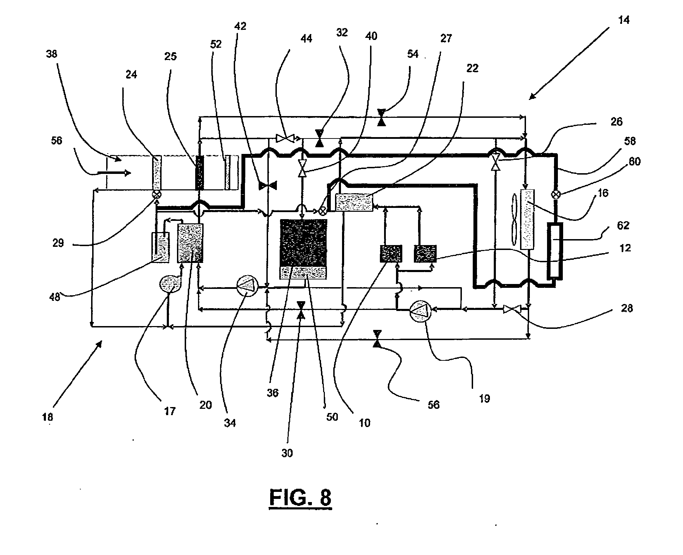

L'invention n'est pas limitée au mode de réalisation décrit ci-dessus, par exemple, selon un second mode de réalisation de l'invention illustré à la figure 8, on peut prévoir une branche de dérivation 58 dans laquelle le fluide caloporteur s'écoule à partir de l'amont de la vanne de détente 29 pour aboutir en entrée de le premier évaporateur 22 selon le sens d'écoulement du fluide caloporteur. Ladite branche comprend en série une vanne de détente 60 couplée à un échangeur de chaleur 62 entre le fluide caloporteur et l'air pouvant fonctionner aussi bien en tant que condenseur qu'en tant qu'évaporateur.

## Revendications

1. Dispositif de gestion thermique d'un véhicule comportant une boucle (18) de climatisation et une boucle (14) de refroidissement moteur, ladite boucle de refroidissement moteur comportant une unité électrique (10) participant pour toute ou partie à la propulsion du véhicule et apte à être refroidi par un liquide de refroidissement et ladite boucle de climatisation (18), dans laquelle circule un fluide caloporteur, comportant au moins un condenseur apte à permettre un échange thermique entre le liquide de refroidissement et ledit fluide caloporteur, **caractérisé en ce que** ladite boucle de refroidissement moteur (14) comporte, en outre, un échangeur de chaleur (25), dit radiateur de chauffage, apte à permettre un échange thermique entre le liquide de refroidissement et un flux d'air, ledit flux d'air étant destiné à chauffer, climatiser et/ou ventiler l'habitacle du véhicule automobile, ledit condenseur (20) et ledit radiateur de chauffage (25) étant disposé l'un par rapport à l'autre de manière à ce que le liquide de refroidissement traversant ledit radiateur de chauffage (25) puisse au moins être réchauffé en traversant ledit condenseur (20).

2. Dispositif selon la revendication 1 dans lequel ladite unité électrique est un groupe moto-propulseur comportant moteur électrique (10).

3. Dispositif selon la revendication 2 dans lequel ladite boucle de climatisation (18) comporte en outre un premier évaporateur (22) apte à permettre un échange thermique entre ledit liquide de refroidissement et ledit fluide caloporteur, et, un second évaporateur (24) apte à permettre un échange thermique entre ledit fluide caloporteur et un flux air et dans lequel ledit premier évaporateur (22) est disposé par rapport audit moteur (10) de manière à ce que des calories/frigories emmagasinées par le liquide de refroidissement après son passage à travers ledit moteur (10) puissent être utilisées lors l'échange qui s'effectuera par la suite dans le premier évaporateur (22) entre liquide de refroidissement et le fluide caloporteur de la boucle de climatisation (18).

4. Dispositif selon l'une des revendications 1 à 3, dans lequel le radiateur de chauffage (25) est intégré dans un boîtier de chauffage, climatisation et/ou de ventilation (38) de l'habitacle.

5. Dispositif selon l'une des revendications 2 à 4, dans lequel la boucle de refroidissement moteur (14) comporte, en outre, un vase de stockage (36) apte à stocker l'énergie dissipée sous forme de calories ou de frigories par l'intermédiaire du liquide de refroidissement, ledit vase étant monté en série d'une part avec le groupe moto-propulseur (10, 12) et d'autre part avec le radiateur de chauffage (25).

6. Dispositif selon la revendication 5, dans lequel le stockage de l'énergie dans le vase de stockage (36) s'opère lors de la recharge de la batterie du véhicule électrique.

7. Dispositif selon l'une quelconque des revendications 2 à 6, dans lequel le radiateur de refroidissement (16), le groupe moto-propulseur (10, 12) et le premier évaporateur (22), apte à permettre un échange thermique entre ledit liquide de refroidissement et ledit fluide caloporteur, sont en série.

8. Dispositif selon l'une quelconque des revendications 2 à 7, dans lequel la voie de contournement du radiateur de refroidissement (16), le groupe moto-propulseur (10, 12) et le premier évaporateur (22), apte à permettre un échange thermique entre ledit liquide de refroidissement et ledit fluide caloporteur, sont en série.

9. Procédé de gestion thermique, notamment pour le refroidissement moteur et/ou le chauffage, la climatisation et/ou la ventilation d'un véhicule automobile, ledit procédé utilisant un dispositif de gestion thermique selon les revendications 1 à 8, **caractérisé en ce que**, ladite boucle de refroidissement moteur (14) comporte deux sous-boucles comportant respectivement ledit radiateur de chauffage (25) et ledit radiateur de refroidissement (16) et lors d'un besoin de chauffage de l'habitacle, on transfère les calories d'une desdites sous-boucles à l'autre par l'intermédiaire de la boucle de climatisation (18) et au besoin, on utilise ledit vase de stockage (36) comprenant de l'énergie stockée sous forme de calories, et, si encore besoin, dans cet ordre, des résistances de chauffage sur l'air (52) montées dans un boitier de chauffage, climatisation et/ou de ventilation (38) de l'habitacle puis des résistances de chauffage sur l'eau (50) montées dans ledit vase de stockage (36).

10. Procédé de gestion thermique selon la revendication 9 dans lequel lors d'un besoin de chauffage et de déshumidification de l'habitacle, on dirige au moins un partie du fluide caloporteur de la boucle de climatisation (18) vers le détendeur (29) et le second évaporateur (24).

11. Procédé de gestion thermique selon la revendication 10, dans lequel lors d'un besoin de chauffage et de déshumidification de l'habitacle, on utilise en outre le vase de stockage (36) comprenant de l'énergie stockée sous forme de calories pour chauffer directement l'habitacle.

12. Procédé de gestion thermique selon l'une des revendications 9 à 11, dans lequel lors d'un besoin de climatisation de l'habitacle, on utilise le vase de stockage (36) comprenant de l'énergie stockée sous forme de frigories pour refroidir directement l'habitacle.

13. Procédé de gestion thermique selon l'une des revendications 9 à 12, dans lequel lors de la recharge du vase de stockage (36) en chaleur, le procédé comporte les étapes suivantes :
• échange de calories entre le fluide caloporteur de la boucle de climatisation (18) et le liquide de refroidissement de la boucle de refroidissement moteur (14) au sein du condenseur (20), le liquide de refroidissement récupérant ainsi une partie de l'énergie sous forme de calories du fluide caloporteur, et
• stockage de ladite énergie récupérée par le liquide de refroidissement à son arrivée dans le vase de stockage (36).

14. Procédé de gestion thermique selon l'une des revendications 9 à 13, dans lequel lors de la recharge du vase de stockage (36) en froid, la boucle de refroidissement moteur (14) comporte deux sous-circuits, le premier sous-circuit assurant la partie froide de la boucle de refroidissement moteur (14) et comportant le premier évaporateur (22) et le second sous-circuit comportant le radiateur de refroidissement (16), ledit procédé comportant les étapes suivantes:
• échange de frigories entre le fluide caloporteur de la boucle de climatisation (18) et le liquide de refroidissement circulant dans le premier circuit assurant la partie froide de la boucle de refroidissement moteur (14) au sein du premier évaporateur (22), le liquide de refroidissement récupérant ainsi une partie de l'énergie sous forme de frigories du fluide caloporteur, et
• stockage de ladite énergie récupérée par le liquide de refroidissement à son arrivée dans le vase de stockage (36).

## Patentansprüche

1. Wärmemanagementvorrichtung eines Fahrzeugs, die einen Klimatisierungskreislauf (18) und einen Motorkühlkreislauf (14) aufweist, wobei der Motorkühlkreislauf eine elektrische Einheit (10) aufweist, die ganz oder teilweise am Antrieb des Fahrzeugs beteiligt ist und von einer Kühlflüssigkeit gekühlt werden kann, und der Klimatisierungskreislauf (18), in dem ein Wärmeträgerfluid zirkuliert, mindestens einen Kondensator aufweist, der einen Wärmeaustausch zwischen der Kühlflüssigkeit und dem Wärmeträgerfluid erlauben kann, **dadurch gekennzeichnet, dass** der Motorkühlkreislauf (14) außerdem einen Wärmetauscher (25), Heizstrahler genannt, aufweist, der einen Wärmeaustausch zwischen der Kühlflüssigkeit und einem Luftstrom erlauben kann, wobei der Luftstrom dazu bestimmt ist, den Innenraum des Kraftfahrzeugs zu heizen, zu klimatisieren und/oder zu belüften, wobei der Kondensator (20) und der Heizstrahler (25) so zueinander angeordnet sind, dass die den Heizstrahler (25) durchquerende Kühlflüssigkeit zumindest beim Durchqueren des Kondensators (20) erwärmt werden kann.

2. Vorrichtung nach Anspruch 1, wobei die elektrische Einheit eine Antriebseinheit ist, die einen Elektromotor (10) aufweist.

3. Vorrichtung nach Anspruch 2, wobei der Klimatisierungskreislauf (18) außerdem einen ersten Verdampfer (22), der einen Wärmeaustausch zwischen der Kühlflüssigkeit und dem Wärmeträgerfluid erlauben kann, und einen zweiten Verdampfer (24) aufweist, der einen Wärmeaustausch zwischen dem Wärmeträgerfluid und einem Luftstrom erlauben kann, und wobei der erste Verdampfer (22) so bezüglich des Motors (10) angeordnet ist, dass von der Kühlflüssigkeit nach ihrem Durchgang durch den Motor (10) gespeicherte Kalorien/Frigorien bei dem Austausch verwendet werden können, der anschließend im ersten Verdampfer (22) zwischen der Kühlflüssigkeit und dem Wärmeträgerfluid des Klimatisierungskreislaufs (18) stattfindet.

4. Vorrichtung nach einem der Ansprüche 1 bis 3, wobei der Heizstrahler (25) in ein Heiz-, Klimatisierungs- und/oder Belüftungsgehäuse (38) des Fahrzeuginnenraums integriert ist.

5. Vorrichtung nach einem der Ansprüche 2 bis 4, wobei der Motorkühlkreislauf (14) außerdem ein Speichergefäß (36) aufweist, das die in Form von Kalorien oder Frigorien abgeleitete Energie mit Hilfe der Kühlflüssigkeit speichern kann, wobei das Gefäß in Reihe einerseits mit der Antriebseinheit (10, 12) und andererseits mit dem Heizstrahler (25) montiert ist.

6. Vorrichtung nach Anspruch 5, wobei die Speicherung der Energie im Speichergefäß (36) beim Aufladen der Batterie des Elektrofahrzeugs erfolgt.

7. Vorrichtung nach einem der Ansprüche 2 bis 6, wobei der Kühlstrahler (16), die Antriebseinheit (10, 12) und der erste Verdampfer (22), der einen Wärmeaustausch zwischen der Kühlflüssigkeit und dem Wärmeträgerfluid erlauben kann, in Reihe geschaltet sind.

8. Vorrichtung nach einem der Ansprüche 2 bis 7, wobei der Umgehungskanal des Kühlstrahlers (16), die Antriebseinheit (10, 12) und der erste Verdampfer (22), der einen Wärmeaustausch zwischen der Kühlflüssigkeit und dem Wärmeträgerfluid erlauben kann, in Reihe geschaltet sind.

9. Wärmemanagementverfahren, insbesondere zur Motorkühlung und/oder zum Heizen, Klimatisieren und/oder Belüften eines Kraftfahrzeugs, wobei das Verfahren eine Wärmemanagementvorrichtung nach den Ansprüchen 1 bis 8 verwendet, **dadurch gekennzeichnet, dass** der Motorkühlkreislauf (14) zwei Teilkreisläufe aufweist, die den Heizstrahler (25) bzw. den Kühlstrahler (16) aufweisen, und bei einem Heizbedarf des Fahrzeuginnenraums Kalorien von einem der Teilkreisläufe zum anderen mittels des Klimatisierungskreislaufs (18) übertragen werden, und nach Bedarf das Speichergefäß (36) verwendet wird, das in Form von Kalorien gespeicherte Energie enthält, und bei weiterem Bedarf, in dieser Reihenfolge, Luftheizwiderstände (52), die in ein Heiz-, Klimatisierungs- und/oder Belüftungsgehäuse (38) des Fahrzeuginnenraums montiert sind, und dann Wasserheizwiderstände (50) verwendet werden, die in das Speichergefäß (36) montiert werden.

10. Wärmemanagementverfahren nach Anspruch 9, wobei bei einem Heiz- und Entfeuchtungsbedarf des Fahrzeuginnenraums mindestens ein Teil des Wärmeträgerfluids des Klimatisierungskreislaufs (18) zum Expansionsventil (29) und zum zweiten Verdampfer (24) gelenkt wird.

11. Wärmemanagementverfahren nach Anspruch 10, wobei bei einem Heiz- und Entfeuchtungsbedarf des Fahrzeuginnenraums außerdem das Speichergefäß (36), das in Form von Kalorien gespeicherte Energie enthält, verwendet wird, um den Fahrzeuginnenraum direkt zu heizen.

12. Wärmemanagementverfahren nach einem der Ansprüche 9 bis 11, wobei bei einem Klimatisierungsbedarf des Fahrzeuginnenraums das Speichergefäß (36), das in Form von Frigorien gespeicherte Energie enthält, verwendet wird, um den Fahrzeuginnenraum direkt zu kühlen.

13. Wärmemanagementverfahren nach einem der Ansprüche 9 bis 12, wobei beim Auffüllen des Speichergefäßes (36) mit Wärme das Verfahren die folgenden Schritte aufweist:
• Kalorienaustausch zwischen dem Wärmeträgerfluid des Klimatisierungskreislaufs (18) und der Kühlflüssigkeit des Motorkühlkreislaufs (14) im Kondensator (20), wobei die Kühlflüssigkeit so einen Teil der Energie in Form von Kalorien des Wärmeträgerfluids wiedergewinnt, und
• Speichern der wiedergewonnenen Energie durch die Kühlflüssigkeit bei ihrer Ankunft im Speichergefäß (36).

14. Wärmemanagementverfahren nach einem der Ansprüche 9 bis 13, wobei beim Auffüllen des Speichergefäßes (36) mit Kälte der Motorkühlkreislauf (14) zwei Teilkreisläufe aufweist, wobei der erste Teilkreislauf den Kälteteil des Motorkühlkreislaufs (14) gewährleistet und den ersten Verdampfer (22) aufweist, und der zweite Teilkreislauf den Kühlstrahler (16) aufweist, wobei das Verfahren die folgenden Schritte aufweist:
• Austausch von Frigorien zwischen dem Wärmeträgerfluid des Klimatisierungskreislaufs (18) und der im ersten Kreislauf zirkulierenden Kühlflüssigkeit, der den Kälteteil des Motorkühlkreislaufs (14) im ersten Verdampfer (22) gewährleistet, wobei die Kühlflüssigkeit so einen Teil der Energie in Form von Frigorien des Wärmeträgerfluids wiedergewinnt, und
• Speichern der wiedergewonnenen Energie durch die Kühlflüssigkeit bei ihrer Ankunft im Speichergefäß (36).

## Claims

1. Heat management device of a vehicle comprising an air-conditioning loop (18) and an engine-cooling loop (14), said engine-cooling loop comprising an electric unit (10) participating, fully or partly, in the propulsion of the vehicle and which can be cooled by a coolant and said air-conditioning loop (18), in which a heat-transfer fluid circulates, comprising at least one condenser suitable for allowing a heat exchange between the coolant and said heat-transfer fluid, **characterized in that** said engine-cooling loop (14) comprises, in addition, a heat exchanger (25), called heating radiator, suitable for allowing a heat exchange between the coolant and a flow of air, said flow of air being intended to heat, air-condition and/or ventilate the passenger compartment of the motor vehicle, said condenser (20) and said heating radiator (25) being arranged relative to one another in such a way that the coolant passing through said heating radiator (25) can at least be reheated by passing through said condenser (20).

2. Device according to Claim 1, in which said electric unit is a power train comprising an electric motor (10).

3. Device according to Claim 2, in which said air-conditioning loop (18) also comprises a first evaporator (22) suitable for allowing a heat exchange between said coolant and said heat-transfer fluid, and, a second evaporator (24) suitable for allowing a heat exchange between said heat-transfer fluid and a flow of air and in which said first evaporator (22) is arranged relative to said engine (10) in such a way that calories/frigories stored by the coolant after its passage through said engine (10) can be used in the exchange which will then be performed in the first evaporator (22) between coolant and the heat-transfer fluid of the air-conditioning loop (18).

4. Device according to one of Claims 1 to 3, in which the heating radiator (25) is incorporated in a passenger-compartment heating, air-conditioning and/or ventilation module (38).

5. Device according to one of Claims 2 to 4, in which the engine-cooling loop (14) also comprises a storage tank (36) suitable for storing the energy dissipated in the form of calories or frigories via the coolant, said tank being mounted in series on the one hand with the power train (10, 12) and on the other hand with the heating radiator (25).

6. Device according to Claim 5, in which the storage of the energy in the storage tank (36) takes place when the battery of the electric vehicle is being recharged.

7. Device according to any one of Claims 2 to 6, in which the cooling radiator (16), the power train (10, 12) and the first evaporator (22), suitable for allowing a heat exchange between said coolant and said heat-transfer fluid, are in series.

8. Device according to any one of Claims 2 to 7, in which the pathway for bypassing the cooling radiator (16), the power train (10, 12) and the first evaporator (22), suitable for allowing a heat exchange between said coolant and said heat-transfer fluid, are in series.

9. Heat management method, notably for engine cooling and/or for the heating, air-conditioning and/or ventilation of a motor vehicle, said method using a heat management device according to Claims 1 to 8, **characterized in that** said engine-cooling loop (14) comprises two subloops respectively comprising said heating radiator (25) and said cooling radiator (16) and, upon a heating demand from the passenger compartment, the calories are transferred from one of said subloops to the other via the air-conditioning loop (18) and, when necessary, said storage tank (36) comprising energy stored in the form of calories is used, and, again if necessary, in this order, heating resistors on the air (52) mounted in a heating, air-conditioning and/or ventilation module (38) of the passenger compartment and then heating resistors on the water (50) mounted in said storage tank (36), are used.

10. Heat management method according to Claim 9, in which, when there is a need to heat and/or dehumidify the passenger compartment, at least a part of the heat-transfer fluid is directed from the air-conditioning loop (18) to the expansion valve (29) and the second evaporator (24).

11. Heat management method according to Claim 10, in which, when there is a need to heat and dehumidify the passenger compartment, the storage tank (36) comprising energy stored in the form of calories is also used to directly heat the passenger compartment.

12. Heat management method according to one of Claims 9 to 11, in which, when there is a need for air-conditioning the passenger compartment, the storage tank (36) comprising energy stored in the form of frigories is used to directly cool the passenger compartment.

13. Heat management method according to one of Claims 9 to 12, in which, when the storage tank (36) is being recharged with heat, the method comprises the following steps:
• exchange of calories between the heat-transfer fluid of the air-conditioning loop (18) and the coolant of the engine-cooling loop (14) within the condenser (20), the coolant thus recovering a portion of the energy in the form of calories from the heat-transfer fluid, and
• storage of said energy recovered by the coolant on its arrival in the storage tank (36).

14. Heat management method according to one of Claims 9 to 13, in which, when the storage tank (36) is being recharged with cold, the engine-cooling loop (14) comprises two subcircuits, the first subcircuit providing the cold part of the engine-cooling loop (14) and comprising the first evaporator (22) and the second subcircuit comprising the cooling radiator (16), said method comprising the following steps:
• exchange of frigories between the heat-transfer fluid of the air-conditioning loop (18) and the coolant circulating in the first circuit providing the cold part of the engine-cooling loop (14) within the first evaporator (22), the coolant thus recovering a portion of the energy in the form of frigories from the heat-transfer fluid, and
• storage of said energy recovered by the coolant on its arrival in the storage tank (36).
